# EUROPEAN PATENT APPLICATION

(11) **EP 2 202 198 A1**
(43) Date of publication of application: **30.06.2010**
(21) Application number: 09156005.2
(22) Date of filing: 24.03.2009
(51) Int. Cl.: C01B 3/08, C25B 1/02

(54) **Method for producing hydrogen and applications thereof**

(30) Priority: 02.12.2008 TW 97146845
(71) Applicant: Liung Feng Industrial Co Ltd, Taipei Hsien (TW)
(72) Inventor: HSU, Tsang-lin, Tu-Cheng Shih (TW); Lin, Heng-I, Tu-Cheng Shih (TW); Huang, Chin-chen, Tu-Cheng Shih (TW)
(74) Representative: Viering, Jentschura & Partner

(57) **Abstract**

A method for producing hydrogen and applications thereof, includes: a reaction and formation step, a reaction and acceleration step, and an extended treatment step, the reaction and formation step performed by a) providing a reaction object made of a metallic material; b) cleaning the reaction object; and c) having the cleaned reaction object chemically contacted with an electrolyte solution so as to generate a chemical reaction and to produce hydrogen and by-products thereof, the reaction and acceleration step performed to accelerate hydrogen production rate through the chemical reaction by adding an acidic material while performing the reaction and formation step, and the extended treatment step performed by drying an electrolyte solution of metal ions produced after hydrogen production reaction, and treating the electrolyte solution of metal ions with appropriate solutions so as to completely achieve economical and practical purposes of carrying out oxidation reduction and prevent a second pollution.

## Description

### BACKGROUND OF THE INVENTION

### 1. FIELD OF THE INVENTION

The present invention relates to a method for producing hydrogen, and particularly to a method for producing hydrogen through a chemical reaction or simultaneously through an electrochemical reaction to improve hydrogen production rate and thereby generate an electrolyte solution of metal ions after producing hydrogen, the electrolyte solution of metal ions able to be reduced and recycled as electrode material of rechargeable batteries, or as a metal by electrolysis method for producing hydrogen, so as to completely achieve economical and practical purposes of carrying out oxidation-reduction and prevent the second environmental pollution.

### 2. RELATED ART

Hydrogen is a clean energy resource, which can be adopted as fuel and energy for industrial applications, such as desulfurization materials for oil working, chemical industrial, metallurgy industrial, and semi-conductor industry. Besides, hydrogen reacted in fuel cells do not produce carbon dioxide, therefore, hydrogen is expected to be an alternative resource of energy in the proceeding development. It is no doubt that research and needs of hydrogen are inevitable to be risen in the near future. Thus the study of application of hydrogen production is very important.

As is well known, elemental hydrogen is relatively rare on earth, so people try many ways to produce hydrogen. Main conventional techniques of producing hydrogen are as follows: steam reforming technique, partial oxidation technique, gasification technique, or use an electrolyte solution to produce hydrogen; however, processes of producing hydrogen with the first three techniques mentioned above generate lots of carbon dioxide as well, which seriously causes bad effect on global warming. Unfortunately, the fourth technique mentioned above requires large electricity consumption during processes of producing hydrogen and therefore its cost is relatively high.

Another way to produce hydrogen is to take Sodium borohydride (NaBH₄) in an alkaline solution and react with a catalyst to produce hydrogen, by which way hydrogen can be produced quickly and simply. However, NaBH₄ must be refined from borates, which costs highly about USD 80 to refine one kilogram NaBH₄; besides, worldwide borates are merely separated in a few countries (for example, America and Turkey) and therefore are not easy to be obtained.

Still, another way to produce hydrogen is to use metal scrap; for example, recycle wasted aluminum cans as reaction object for producing hydrogen. However, coatings of the recycled aluminum cans have to be eluted by sulfuric acid, which arises the problem of treating industrial wastewater and leads to a second environmental pollution.

### SUMMARY OF THE INVENTION

Accordingly, an object of the present invention is to provide an innovative method for producing hydrogen which takes metal, metallic alloys, or metal scrap as reaction object to react with an electrolyte solution through a chemical reaction or simultaneously through an electrochemical reaction to produce hydrogen, which can be utilized in industrial plants (such as a steel-making plant or incinerating plant), large hydrogen devices (stationary fuel cells) or portable hydrogen devices. In addition, an electrolyte solution of metal ions generated after hydrogen production reaction is able to be recycled as electrolyte and electrode material of rechargeable batteries or regenerated to a metal by electrolysis method as material for producing hydrogen, which completely achieves economic and practical purposes of carrying out oxidation reduction and prevents the second environmental pollution.

Another object of the present invention is to provide a method for producing hydrogen much more effective by accelerating hydrogen production rate, in which method organic acid or non-organic acid is added during a process of a chemical reaction or during processes of the chemical reaction and an electrochemical reaction at the same time.

To achieve the above-mentioned objects, the method for producing hydrogen of the present invention includes a reaction and formation step, which is able to be performed in several ways, wherein one of the ways to perform the reaction and formation step is defined by taking metal, metallic alloys, or metal scrap as reaction object, the reaction object after being cleaned and contacted with an electrolyte solution resulting in chemical reaction thereby to produce hydrogen and by-products thereof.

According to the above-mentioned reaction and formation step, the electrolyte solution is of electrical conductivity or is acidic aqueous solution.

Still further, another way to perform the reaction and formation step is defined by cleaning dissimilar metals and then combining the dissimilar metals to be used as reaction object for producing hydrogen, the combined dissimilar metals being immersed in an electrolyte solution or water to result in electrochemical reaction due to reduction potential difference between the dissimilar metals thereby to produce hydrogen and by-products thereof.

According to the above-mentioned reaction and formation step, one of the dissimilar metals of lower reduction potential is defined as a positive electrode as an anode metal selected from metal scrap material such as magnesium alloy, aluminum alloy and so on, while the other one of the dissimilar metals of higher reduction potential is defined as a negative electrode as a cathode metal being stainless steel or platinum; moreover, the electrolyte solution causing the electrochemical reaction is sodium chloride, physiological saline, KC1 or solutions of electrical conductivity.

The method for producing hydrogen further includes a reaction and acceleration step, which is able to be performed in several ways, wherein one of the ways is to add organic acid or non-organic acid to the reaction and formation step to accelerate hydrogen production over the chemical reaction.

According to the above-mentioned reaction and acceleration step, the organic acid is acetic acid, formic acid or citric acid, and the non-organic acid is hydrochloric acid, sulfuric acid or nitric acid.

Still further, another way to perform the reaction and acceleration step is to combine the metal, metallic alloys, or metal scrap with a catalyst, and then immersed in an acidic electrolyte solution to result in chemical and electrochemical reactions thereby to accelerate hydrogen production rate.

Still further, the method for producing hydrogen further includes an extended treatment step, in which an electrolyte solution of metal ions generated after hydrogen production reaction is able to be reapplied to rechargeable batteries by being dried and treated with appropriate solutions or the electrolyte of metal ions can be reduced by way of electrolysis to be recycled for hydrogen production.

### BRIEF DESCRIPTION OF THE DRAWINGS

Fig. 1 is a flowchart depicting a method for producing hydrogen and applications thereof of a first embodiment of the present invention;

Fig. 2 is a flowchart illustrating a second embodiment of the present invention;

Figs. 3A and 3B illustrating time-cumulative volume graphs of hydrogen production of the present invention; and

Fig. 4 is a schematic flowchart of a third embodiment of the present invention.

### DESCRIPTION OF THE PREFERRED EMBODIMENTS

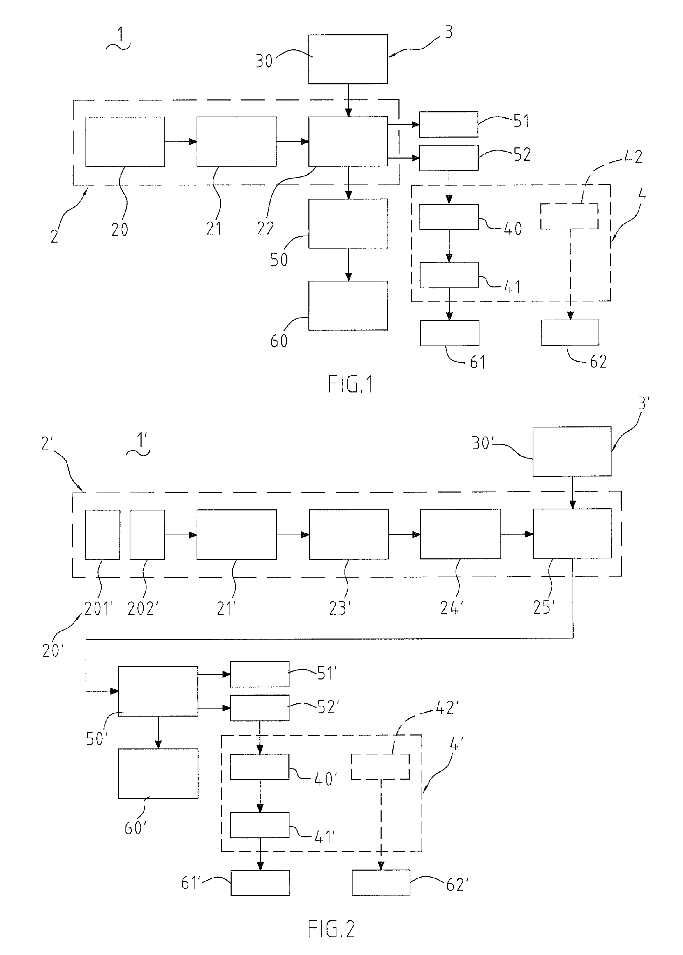

Referring to Fig. 1 illustrating a flowchart of a first embodiment of a method for producing hydrogen 1 according to the present invention. The method for producing hydrogen 1, includes steps of: a reaction and formation step 2, a reaction and acceleration step 3, and an extended treatment step 4, wherein the reaction and formation step 2 is performed by providing reaction object 20 of either metal, metallic alloys, or metal scrap for producing hydrogen; the reaction object 20 is to be cleaned 21 and then contacted with an electrolyte solution 22; as a result of having contact with the electrolyte solution 22, a chemical reaction is generated and thereby produce hydrogen 50 and by-products 51, the generated hydrogen 50 is able to be utilized in industrial plants (such as a steel-making plant or incinerating plant) or large hydrogen devices (stationary fuel cells) 60.

The reaction and acceleration step 3 is performed by adding organic acid (such as acetic acid, formic acid or citric acid and so on) or non-organic acid (hydrochloric acid, sulfuric acid or nitric acid and so on) 30 to the electrolyte solution 22 of the reaction and formation step 2 in order to accelerate hydrogen production rate through the chemical reaction, a reaction formulation for the acceleration being as follows:

Mt + RCOOH → RCOOMt + 1/2H₂

Mt + HCl → MtCl + 1/2H₂

In addition, the reaction and acceleration step 3 can be performed by binding the reaction object 20 of either metal, metallic alloys, or metal scrap with a catalyst in an acidic electrolyte solution to result in a chemical or electrochemical reaction to accelerate hydrogen production rate.

The extended treatment step 4 is performed by utilizing electrolyte solution of metal ions 52 produced after hydrogen production reaction for extended applications, wherein the electrolyte solution of metal ions 52 is being dried 40 and treated with an appropriate solution, such as absolute alcohol or tetrahydrofuran (THF) 41, for being applied to rechargeable batteries 61; alternatively, the electrolyte solution of metal ions 52 can be separated by way of electrolysis 42 to be recycled as material for producing hydrogen with the method 1 or reapplied as an electrode material 62 of the rechargeable batteries 61.

Referring to Fig. 2 illustrating a second embodiment of the present invention, a method for producing hydrogen 1', includes a reaction and formation step 2', a reaction and acceleration step 3' and an extended treatment step 4', the reaction and formation step 2' is defined by taking dissimilar metals 20' including an anode metal 201' and a cathode metal 202' as reaction object for producing hydrogen, the anode metal 201' selected from metal scrap such as magnesium alloy or aluminum alloy, the cathode metal 202' being stainless steel or platinum, wherein the reaction object are prepared by following steps: first, the anode metal 201' and the cathode metal 202' are being cleaned 21'; secondly, the anode metal 201' is being smashed (or further molten in a furnace) 23' and sprayed on the cathode metal 202', then rolling up the cathode metal 202' with the anode metal 201' to be tube-shaped, or directly conveying the cathode metal 202' with conveyor belts into a hydrogen production reactor to be bound with the smashed anode metal 201' as the reaction object; alternatively, both of the anode metal 201' and the cathode metal 202' are able to be smashed to be grain-shaped or irregular shape and then put into the hydrogen production reactor for having contact with each other, the combined anode and cathode metals 201', 202' are immersed in an electrolyte solution 25' or water to result in an electrochemical reaction due to reduction potential difference between the dissimilar metals, and thereby to produce hydrogen 50' and by-products 51' thereof, wherein the generated hydrogen 50' is able to be utilized in industrial plants (such as a steel-making plant or incinerating plant) or large hydrogen devices (stationary fuel cells) 60'.

Particularly mention that an optimal value of a mutual potential difference between the anode and the cathode metals 201', 202' is within 0.71V to 3.49V, the electrolyte solution 25' is sodium chloride or KC1 solution, and when the anode metal 201' is magnesium alloy and the cathode metal 202' is stainless steel mesh of model AISI 304, a formulation for the electrochemical reaction is as follows:

Mg + 2 H₂O → Mg(OH)₂ + H₂.

The reaction and acceleration step 3' is performed by adding organic acid or non-organic acid 30' to the reaction and formation step 2' to accelerate hydrogen production rate over the chemical reaction, wherein the organic acid is acetic acid, formic acid or citric acid, and the non-organic acid is hydrochloric acid, sulfuric acid or nitric acid, a reaction formulation for the acceleration being as follows:

Mt + RCOOH → RCOOMt + 1/2H₂

Mt + HCl → MtCl + 1/2H₂

The extended treatment step 4' is performed by drying 40' an electrolyte solution of metal ions 52' and further treating it with appropriate solutions 41' (such as absolute alcohol or tetrahydrofuran, THF) so that it can be reapplied to rechargeable batteries; alternatively, the electrolyte solution of metal ions 52' can be separated by way of electrolysis 42' to be recycled for producing hydrogen with the method 1' or reapplied as an electrode material 62' of the rechargeable batteries 61'.

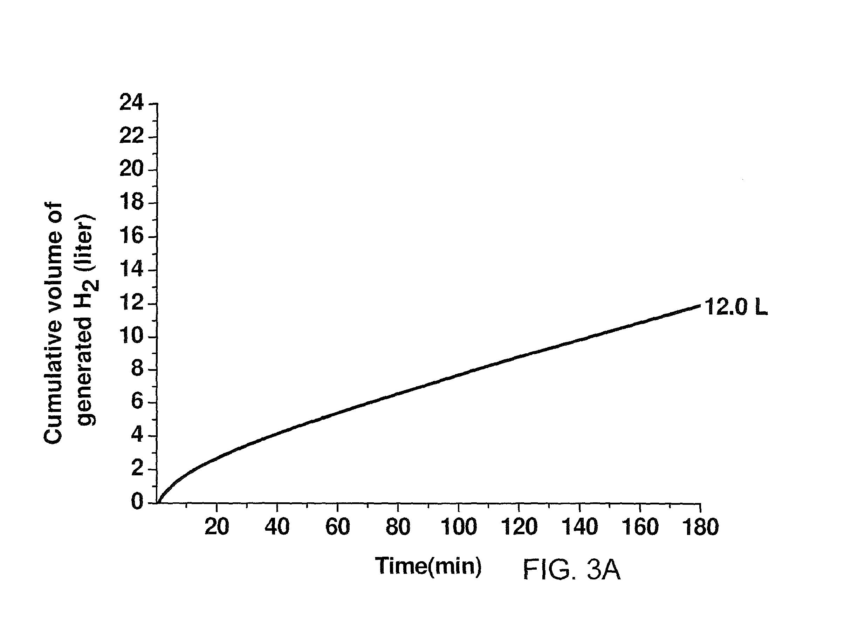

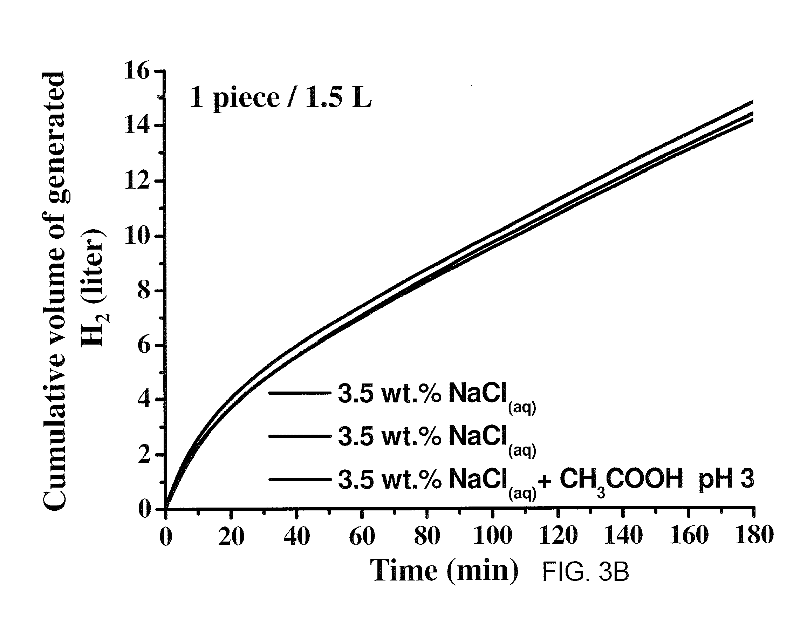

According to the above-mentioned first and second embodiments, the method 1, 1' can produce not only hydrogen but also by-products of magnesium hydroxide, which can be used as fire retardant materials of heat-resistant products. Further referring to Figs. 3A and 3B, illustrating time-cumulative volume graphs of hydrogen production, it is obviously shown from Figs. 3A and 3B that under same conditions, namely, 1500ml electrolyte, 3.5 wt% sodium chloride solution, the anode metal being magnesium alloy, the cathode metal being stainless steel mesh of size 2 x 8 cm2 (AISI 304), organic acid (acetic acid) adding is effectively improving the hydrogen production rate and cumulative volume.

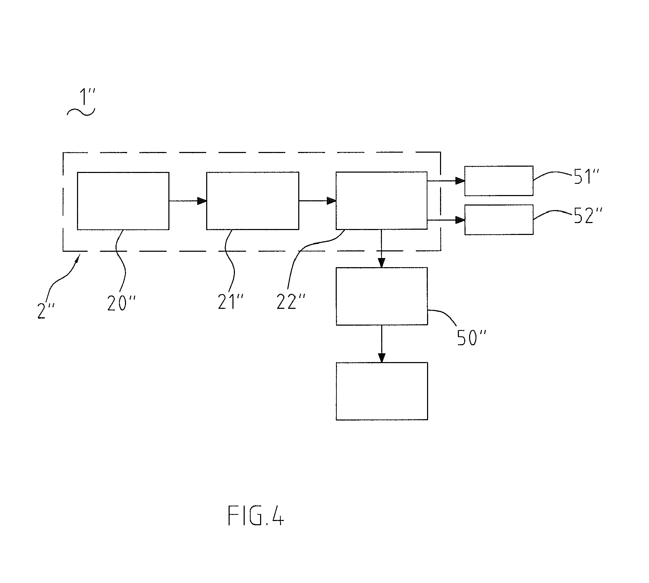

Referring to Fig. 4 illustrating a third embodiment of the present invention, in this embodiment, a method for producing hydrogen 1 " is to simply carry out a chemical reaction to produce hydrogen, and further perform the reaction and acceleration step 3 and the extended treatment step 4 at different time, as illustrated in Fig. 4, the method 1" includes a reaction and formation step 2" defined by taking metal, metallic alloys, or metal scrap 20" as reaction object for producing hydrogen, the reaction object is then being cleaned 21" and contacted with an acidic solution 22"(for example: acidic electrolyte or acidic aqueous solution) so as to generate a chemical reaction and thereby to produce hydrogen 50" and by-products 51 " thereof.

Accordingly, the reaction object of the method of the present invention is metal, metallic alloys, or metal scrap, and such materials are harmless to our environment and prevent second pollution; moreover, by-products - hydroxide, organic or non-organic metallic compound, generated from the method are useful raw materials for other products, the by-products increase added value of the present invention and provide the present invention with wide industrial applications; furthermore, the electrolyte solution of metal ions generated after hydrogen production reaction is able to be recycled as electrolyte and electrode material of rechargeable batteries, which completely achieves economical and practical purposes of carrying out oxidation and reduction.

It is understood that the present invention may be embodied in other forms without departing from the spirit thereof. Thus, the present examples and embodiments are to be considered in all respects as illustrative and not restrictive, and the invention is not to be limited to the details given herein.

## Claims

1. A method for producing hydrogen, comprising: a reaction and formation step and a reaction and acceleration step, wherein the reaction and formation step is performed by:
a) providing a reaction object made of a metallic material;
b) cleaning the reaction object; and
c) having the cleaned reaction object chemically contacted with an electrolyte solution so as to generate a chemical reaction and to produce hydrogen and by-products thereof; and
the reaction and acceleration step performed to accelerate hydrogen production rate through the chemical reaction by adding an acidic material while performing the reaction and formation step, a reaction formulation for the acceleration disclosed as follows.
Mt + RCOOH → RCOOMt + 1/2H₂
Mt + HCl → MtCl + 1/2H₂

2. The method as claimed in claim 1, wherein the metallic material is either metal, metallic alloys, or metal scrap, the acidic material is organic acid or non-organic acid, and the electrolyte solution is of electrical conductivity or is an acidic solution.

3. The method as claimed in claim 2, wherein the organic acid is acetic acid, formic acid or citric acid, and the non-organic acid is hydrochloric acid, sulfuric acid or nitric acid.

4. The method as claimed in claim 2, further comprising an extended treatment step performed by drying an electrolyte solution of metal ions produced after hydrogen production reaction, and treating the electrolyte solution of metal ions with absolute alcohol or tetrahydrofuran (THF) whereby the electrolyte solution of metal ions able to be reapplied as an electrode material of rechargeable batteries.

5. The method as claimed in claim 2, wherein the metallic material is further combined with a catalyst, the combined metallic material and the catalyst chemically contacted with the acidic electrolyte solution so as to generate the chemical reaction and an electrochemical reaction for accelerating the hydrogen production rate.

6. The method as claimed in claim 2, further comprising an extended treatment step performed by reducing an electrolyte solution of metal ions produced after hydrogen production reaction by way of electrolysis to metal, the metal reused as material for producing hydrogen with the method or as an electrode material of rechargeable batteries.

7. A method for producing hydrogen, comprising: a reaction and formation step and a reaction and acceleration step, wherein the reaction and formation step is performed by
a) providing dissimilar metals;
b) cleaning the dissimilar metals and then combining the dissimilar metals for being used as reaction objects for producing hydrogen;
and
c) immersing the combined dissimilar metals in either an electrolyte solution or water to result in an electrochemical reaction through reduction potential difference between the dissimilar metals thereby to produce hydrogen and by-products thereof; and
the reaction and acceleration step performed to accelerate hydrogen production rate through an chemical reaction by adding an acidic material while performing the reaction and formation step, a reaction formulation for the acceleration disclosed as follows.
M t + RCOOH → RCOOMt + 1/2H₂
Mt + HCl → MtCl + 1/2H₂

8. The method as claimed in claim 7, wherein one of the dissimilar metals of lower reduction potential is defined as a positive electrode as an anode metal, the anode metal selected from a metal scrap product made of magnesium alloy or aluminum alloy, while the other one of the dissimilar metals of higher reduction potential is defined as a negative electrode as a cathode metal, the cathode metal is stainless steel or platinum.

9. The method as claimed in claim 8, wherein the dissimilar metals are combined with steps of: a) smashing the anode metal; b) melting the smashed anode metal in a furnace; c) spraying the molten anode metal on the cathode metal; and d) rolling up the cathode metal attached with the anode metal to be tube-shaped, or directly conveying the cathode metal attached with conveyor belts, into a hydrogen production reactor.

10. The method as claimed in claim 8, wherein the dissimilar metals are combined with steps of: a) smashing the anode metal and the cathode metal to be grain-shaped or irregular shape; and b) contacting the anode metal with the cathode metal in a hydrogen production reactor.

11. The method as claimed in claim 7, wherein the acidic material is organic acid or non-organic acid.

12. The method as claimed in claim 11, wherein the organic acid is acetic acid, formic acid or citric acid, and the non-organic acid is hydrochloric acid, sulfuric acid or nitric acid.

13. The method as claimed in claim 7, further comprising an extended treatment step performed by drying an electrolyte solution of metal ions produced after hydrogen production reaction, and treating the electrolyte solution of metal ions with absolute alcohol or tetrahydrofuran (THF) whereby the electrolyte solution of metal ions able to be reapplied as an electrode material of rechargeable batteries.

14. The method as claimed in claim 7, further comprising an extended treatment step performed by reducing an electrolyte solution of metal ions produced after hydrogen production reaction by way of electrolysis to metal, the metal reused as material for producing hydrogen with the method or as an electrode material of rechargeable batteries.

15. A method for producing hydrogen comprising steps of:
a) providing a reaction object made of a metallic material;
b) cleaning the reaction object; and
c) having the cleaned reaction object chemically contacted with an electrolyte solution so as to generate a chemical reaction thereby to produce hydrogen and by-products thereof.

16. The method as claimed in claim 15, wherein the metallic material is either metal, metallic alloys, or metal scrap, and the electrolyte solution is of electrical conductivity or is an acidic solution.

17. The method as claimed in claim 15, further comprising an extended treatment step performed by drying an electrolyte solution of metal ions produced after hydrogen production reaction, and treating the electrolyte solution of metal ions with absolute alcohol or tetrahydrofuran (THF) whereby the electrolyte solution of metal ions able to be reapplied as an electrode material of rechargeable batteries.

18. The method as claimed in claim 15, further comprising an extended treatment step performed by reducing an electrolyte solution of metal ions produced after hydrogen production reaction by way of electrolysis to metal, the metal reused as material for producing hydrogen with the method or as an electrode material of rechargeable batteries.
